# EUROPÄISCHE PATENTANMELDUNG

(11) **EP 0 949 166 A1**
(43) Veröffentlichungstag der Anmeldung: **13.10.1999**
(21) Anmeldenummer: 98810308.1
(22) Anmeldetag: 09.04.1998
(51) Int. Cl.: B65G 47/26

(54) **Verfahren für eine lückenlose Aufstellung von einem Bereitstellungsabschnitt hintereinander zugeführten Behältern**

(71) Anmelder: GRAPHA-HOLDING AG, 6052 Hergiswil (CH)
(72) Erfinder: Boller, Manfred, 79801 Hohentengen (DE); Riehm, Thomas, 9642 Ebnat-Kappel (CH); Oppliger, Jean-Claude, 8155 Niederhasli (CH)

(57) **Zusammenfassung**

Zur Weiterverarbeitung von Behältern (3) durch selektives Befüllen werden diese auf einem Bereitstellungsabschnitt (2) in lückenloser Aufstellung hintereinander bzw. nebeneinander angeordnet und dieser Anordnungsweise wahlweise entnommen, derart, dass durch ein dem Bereitstellungsabschnitt (2) entnommener Behälter (3) und die diesem in Zuführrichtung folgenden Behälter (3) ein das Auffüllen der entstandenen Lücken bewirkendes Nachrücken der jeweils nachfolgenden Behälter (3) auslösen.

## Beschreibung

Die Erfindung betrifft ein Verfahren für eine lückenlose Aufstellung von einem Bereitstellungsabschnitt hintereinander zugeführten Behältern, die dem Bereitstellungsabschnitt wahlweise entnehmbar sind.

Verfahren dieser Art können u.a. in Sortieranlagen für Postgut, Abfüllanlagen für Nahrungs- und Genussmittel oder Zeitschriften-Versand-Anlagen angewandt werden, wo es um die Bereitstellung einer konstanten Anzahl der zu verarbeitenden Behälter geht.

Der Erfindung liegt die Aufgabe zugrunde, ein Verfahren nach der eingangs beschriebenen Art zu entwickeln, das eine hohe Verarbeitungsgeschwindigkeit und -zuverlässigkeit sowie eine einfache Benutzung gewährleistet.

Erfindungsgemäss wird diese Aufgabe dadurch gelöst, dass durch ein dem Bereitstellungsabschnitt entnommener Behälter und die diesem auf bzw. zu dem Bereitstellungsabschnitt in Zuführrichtung betrachtet folgenden Behälter ein das Auffüllen der Lücken bewirkendes, selbsttätiges Nachführen der jeweils nachfolgenden Behälter auslösen.

Diese Massnahme gestattet bei einer Entnahme einzelner oder mehrerer Behälter eine permanente vollständige Belegung des Bereitstellungsabschnittes mit Behältern bzw. eine zuverlässige Verarbeitung in unterschiedlichen Anwendungsbereichen.

Als besonders geeignet sind hier das Einsatzgebiet von zum Versand von flachen Stückgütern benutzte Sortieranlagen der Post, Versandhäuser oder Verlage bzw. Druckereien erwähnt, wie sie beispielsweise in der EP - A - 0 638 501 und 97810617 beschrieben sind.

Vorteilhaft können auf der ganzen Länge des Bereitstellungsabschnittes ein oder mehrere Behälter, auch gleichzeitig entnommen und die hinterlassenen Lücken durch Nachrücken von sich schon auf dem Bereitstellungsabschnitt befindenden oder letzterem zugeführten Behältern aufgefüllt werden. Selbstverständlich ist es möglich, Lücken von mehreren neben- bzw. hintereinandergestandenen entnommenen Behältern nach dem erfindungsgemässen Verfahren umgehend zu schliessen.

Zweckmässig ist der Bereitstellungsabschnitt durch mehrere, als Abstellplätze für die Behälter dienende Förderabschnitte gebildet, wobei durch die Belegung eines Abstellplatzes der auf dem stromaufwärts anschliessenden Förderabschnitt sich befindende Behälter auf dessen Abstellplatz aufgehalten wird, sodass eine genaue und schnelle Zuteilung der Behälter zu den Verarbeitungsstellen erzielt werden.

Es erweist sich deshalb als günstig, wenn ein den Abstellplatz stromabwärts verlassender Behälter den auf dem stromaufwärts aufgehaltenen Behälter zur Förderung freistellt, wodurch eine gegenseitige Abstimmung unter den Behältern entsteht.

Die Behälter können in Erstreckungsrichtung des Bereitstellungsabschnittes oder senkrecht zur Erstreckungsrichtung letzterens nebeneinander zugeführt werden, wozu mehrere parallele Bahnen in den Bereitstellungsabschnitt münden.

Zur Durchführung des erfindunsgemässen Verfahrens ist eine mit allen erfindungswesentlichen Kriterien ausgestattete Vorrichtung vorgeschlagen, die aus einem mehrere quer zur Zuführrichtung der Behälter angeordnete, eine Förderebene bildende, antreibbare Rollen aufweisende Bereitstellungsabschnitt für zugeführte Behälter besteht, und sich dadurch auszeichnet, dass der Bereitstellungsabschnitt durch aneinandergereihte bzw. in Zuführrichtung hintereinander gereihte Förderabschnitte gebildet ist, die als Abstellplätze der Behälter ausgebildet und selbsttätig durch die Behälter bzw. durch deren Entnahme förderwirksam ein- und ausschaltbar sind, wodurch eine zuverlässige, weitestgehend störungsfreie Verarbeitung der Behälter gewährleistet ist.

Hierzu ist in weiterausgestaltender Weise der erfindungsgemässen Vorrichtung vorgesehen, dass im Zwischenbereich zweier benachbarter Förderabschnitte eine dem Abstellplatz des stromabwärts angeordneten Förderabschnittes zugeordnete, durch einen zugeführten Behälter betätigbare Schalteinrichtung angeordnet ist, welche mit einer dem Abstellplatz des stromaufwärts angeordneten Förderabschnitt zugeordneten, ein- und ausschaltbaren Auflaufelement einer Absperreinrichtung verbunden ist, sodass auf eine einfach Art eine genaue Ueberführung der Behälter zwischen den Abstellplätzen stattfinden kann.

Zur Verhinderung des Förderflusses durch Anheben des Auflaufelementes über die Führungsebene kann die mit der Absperreinrichtung verbundene Schalteinrichtung durch einen sich auf dem Abstellplatz eines Förderabschnittes befindenden Behälter in eine den Förderfluss an dem stromaufwärts anschliessenden Förderabschnitt hindernde gegenseitig wirkende Verriegelungsstellung versetzt werden.

Als eine einfache Ausführung erweist es sich bei der erfindungsgemässen Vorrichtung, wenn die Schalteinrichtung einen um eine quer zur Zuführrichtung der Behälter angeordnete Achse schwenkbaren, von einem auf einem Förderabschnitt fortbewegten Behälter zur Verriegelung von Schalt- und Absperreinrichtung in die Förderebene umlegbaren Betätigungshebel, und eine an dem als Hebel um eine Achse schwenkbar ausgebildeten Auflaufelement der Absperreinrichtung angelenkte Klinke zum Einrasten an dem Betätigungshebel aufweist.

Dabei weist die Klinke vorzugsweise eine in der Achse des Betätigungshebels angeordnete Welle distanziert umgebende, die Schwenkbewegung der Klinke begrenzende Ausnehmung auf.

Die Schwenkbewegung des Betätigungshebels oberhalb der Förderebene kann jedoch durch einen an der Klinke ausgebildeten Führungsanschlag begrenzt sein.

Im Sinne einer einfachen Ausführung besitzt der Betätigungshebel auf der gegenüberliegenden Seite der Achse einen zum Einrasten der Klinke vorgesehenen Nocken.

Zur Aushebung des Betätigungshebels aus der Förderebene nach Verlassen eines Behälters und zum Anstellen des als Hebel ausgebildeten Auflaufelementes der Absperreinrichtung ist eine den Betätigungshebel und das Auflaufelement verbindende vorgespannte Zugfeder vorgesehen.

Die funktionellen Zusammenhänge zwischen Schalt- und Absperreinrichtung bleiben ungestört, wenn die Kraft der Zugfeder geringer ist als die durch den an dem als Hebel ausgebildeten Auflaufelement auflaufenden Behälter erzeugte Kraft.

Zur Erzielung einer einfachen Lageranordnung sind die Achsen des Betätigungshebels und des Auflaufelementes konzentrisch auf die Achsen zweier benachbarter Rollen verteilt.

Als einfacher Antrieb des Bereitstellungsabschnittes erweist sich ein endlos umlaufendes Zugmittel, beispielsweise Flach-, Zahnriemen oder Ketten, das mit den fördernden Rollen antriebsverbunden ist.

Zur Meidung einer Verdrehung der Behälter auf dem Bereitstellungsabschnitt kann die Schalt- und Absperreinrichtung jeweils auf beiden Seiten des Bereitstellungsabschnittes vorgesehen werden.

Dabei ist es vorteilhaft, wenn die Auflaufelemente der Absperreinrichtung durch wenigstens eine quer zur Zuführrichtung der Behälter verlaufende Stange verbunden sind, sodass die Behälter durch die Stange über ihre gesamte Breite beaufschlagt werden.

Alternativ kann die Schalt- und Absperreinrichtung etwa längsmittig des Bereitstellungsabschnittes angeordnet sein, wozu bei der Nutzung der Rollenachsen als Achsen des Betätigungshebels und des Auflaufelementes der Absperreinrichtung im Anordnungsbereich letzterer ein Unterbruch der Rollen vorzusehen ist.

Bei einer gleichwertigen alternativen Ausführungsform besteht die erfindungsgemässe Vorrichtung aus einem mehrere quer zur Zuführrichtung der Behälter angeordnete, eine Förderebene bildende, antreibbare Rollen aufweisenden Bereitstellungsabschnitt für nacheinander zugeführte Behälter; dabei weist die Schalteinrichtung einen um eine quer zur Zuführrichtung der Behälter angeordnete Achse schwenkbaren Betätigungshebel auf, der zur lösbaren Verriegelung von Schalt- und Absperreinrichtung, insbesondere zum Aufhalten eines nachgeführten Behälters durch einen stromabwärts fortbewegten oder auf einer Förderebene abgestellten Behälter vorgesehen ist, wobei der Betätigungshebel durch einen an der Schwenkachse gegenüberliegend befestigten, ein um eine parallele Achse drehbar angeordnetes Sperrorgan der Absperreinrichtung in Sperrlage haltenden Riegel ausgebildet ist.

Bewährtermassen weist das Sperrorgan eine gleichmässig um die Achse verteilte gleichseitige Dreieckform von parallel zur Achse verlaufenden Seitenflächen auf, und es ist auf einfache Weise beherrschbar.

Dabei bildet das in Sperrlage versetzte Sperrorgan einerseits eine dem zugeführten Behälter zugewandte senkrechte Seitenfläche und wird andererseits durch den Riegel des von dem stromabwärts nächsten Behälter belasteten Betätigungshebel an der gegenüberliegenden Dreieckskante des Sperrorgans unterstützt, sodass der Behälter trotz förderwirksam angetriebnem Bereitstellungsabschnitt an dem Sperrorgan aufgehalten wird. Bei vollständiger Belegung des Bereitstellungsabschnittes kann letzteres durch ein entsprechendes Signal ausgeschaltet und durch eine oder mehrere entstehende Lücken wieder eingeschaltet werden.

Die Verdrehbarkeit und dreieckige Querschnittsform des Sperrorgans bietet den wichtigen Vorteil, dass die ein Anhalten eines Behälters bewirkende senkrechte Seitenfläche des Absperrorgans nach Aufhebung der Verriegelung von Schalt- und Absperreinrichtung durch den eine Drehbewegung bewirkenden aufgelaufenen Behälter eine zumindest annähernd koplanare Ebene mit der Förderebene des Bereitstellungsabschnittes erzielt werden kann. Die Arretierung des Sperrorgans in dieser Lage wird durch den die zuvor hochstehende Seitenfläche umlegenden resp. überfahrenden Behälter erreicht.

Das Sperrorgan wird in freistehender Lage, in der sich ein Behälter von ihm entfernt hat, durch eine Stellvorrichtung in die Sperrlage zurückversetzt und dort durch den von dem Behälter nach unten gedrückten Betätigungshebel gehalten, so dass der nachkommende Behälter aufgehalten wird, wenigstens so lange, bis sich der vorauslaufende Behälter entfernt hat bzw. dieser der Behälterreihe entnommen worden ist.

Es ist vorteilhaft, wenn die Schwerlinie des einen gleichseitigen Dreiecksquerschnitt aufweisenden Sperrorgans dessen Drehachse bildet, sodass eine gewisse Regelmässigkeit in der Drehbewegung des Sperrorgans ensteht.

Damit die unterschiedlichen Breitenmasse von Behältern deren Förderfluss und Lage nicht beeinträchtigen, weist das Sperrorgan vorteilhaft wenigstens annähernd die Länge einer tragenden Rolle des Bereitstellungsabschnittes auf.

Der Betätigungshebel ist zweckmässig an einer zur Drehachse des Sperrorgans parallelen Welle befestigt, derart, dass jeder der unterschiedlich breiten Behälter ihn zu bewegen vermag.

Damit das Sperrorgan aus der Durchlaufstellung des Behälters in die Sperrlage zurückversetzbar ist, ist wenigstens die eine Stirnseite des Sperrorgans durch ein Einrastrad einer gestellseitig befestigten, einrastenden Blattfeder ausgebildet.

Anschliessend wird die Erfindung unter Bezugnahme auf die Zeichnung, auf die bezüglich aller in der Beschreibung nicht näher erwähnten Einzelheiten ausdrücklich verwiesen wird, anhand zweier Ausführungsbeispiele erläutert. In der Zeichnung zeigen:
- Fig. 1: eine auszugsweise Seitenansicht einer erfindungsgemässen Ausführung,
- Fig. 2: eine Draufsicht auf die Ausführung gemäss Fig. 1,
- Fig. 3: eine auszugsweise vergrösserte Seitenriss-Darstellung der Ausführung gemäss den Fig. 1 und 2 bei stillstehenden Behältern,
- Fig. 4: die Ausführung nach Fig. 3 bei fortbewegten Behältern,
- Fig. 5: die Ausführung nach den Fig. 3 und 4 bei durchlaufendem Behälter,
- Fig. 6: eine auszugsweise Seitenansicht einer alternativen erfindungsgemässen Ausführung,
- Fig. 7: eine Draufsicht auf die Ausführung gemäss Fig. 6,
- Fig. 8: eine auszugsweise Seitenriss-Darstellung der Ausführung gemäss den Fig. 6 und 7,
- Fig. 9: eine gegenüber Fig. 8 anschliessende Sequenz bei fortbewegten Behältern und
- Fig. 10: einen Ausschnitt bei durchlaufendem Behälter.

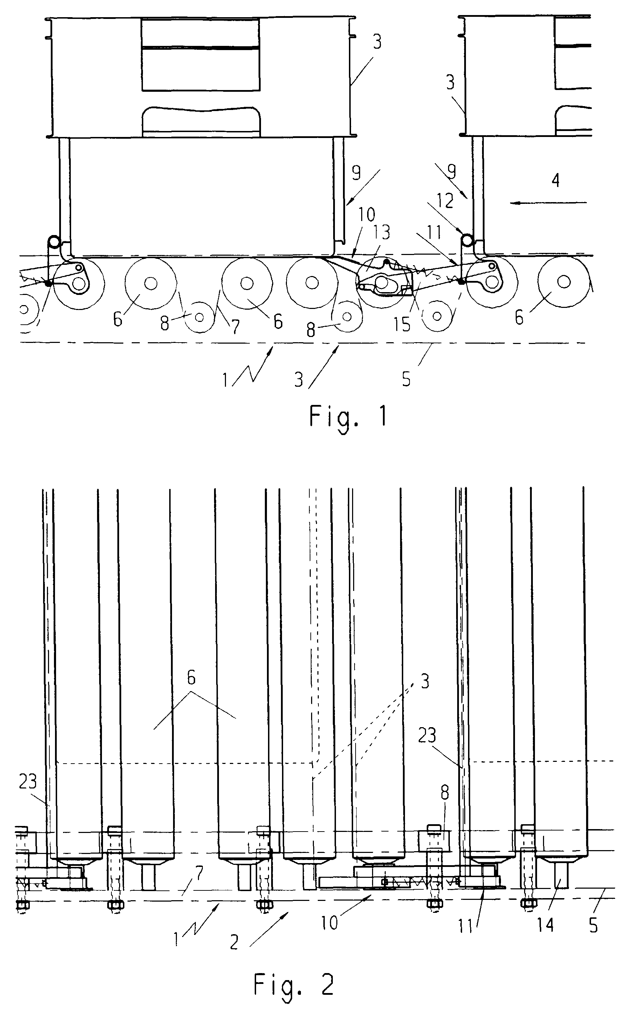

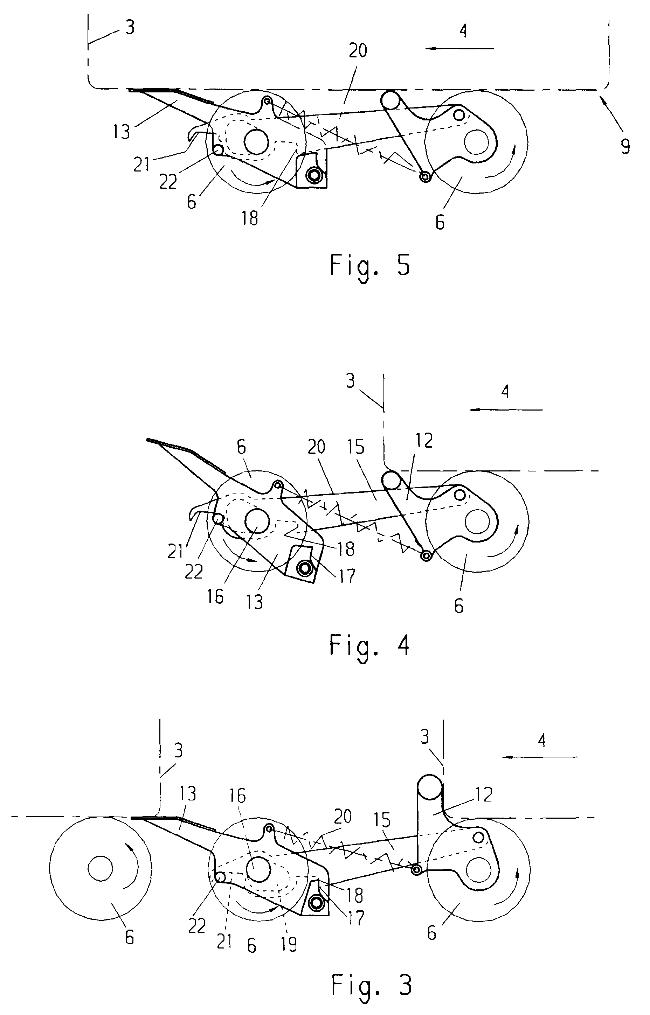

In den Fig. 1 bis 5 ist eine nach dem erfindungsgemässen Verfahren ausgebildete Vorrichtung 1 für eine lückenlose Aufstellung von einem Bereitstellungsabschnitt 2 hintereinander zugeführten Behältern 3 dargestellt, die zur weiteren Verarbeitung ersterem wahlweise aus der Reihe entnehmbar sind. Pfeil 4 bezeichnet die Zuführrichtung der Behälter 3 auf dem Bereitstellungsabschnitt, die beispielsweise zum Befüllen von flachem Postgut, wie Briefe, Zeitschriften etc. durch eine nicht ersichtliche Sortieranlage bereitgestellt werden, wobei die Länge des Bereitstellungsabschnittes 2 der Länge einer parallel verlaufenden Sortierstrecke entspricht, sodass an einer Zielstelle der durch die Sortieranlage gefüllte Behälter gegen einen leeren ausgetauscht werden kann. Dies geschieht in unregelmässigen Zeitabständen und trifft über die Länge des Bereitstellungsabschnittes für alle Förderabschnitte zu.
Fig. 1 zeigt auszugsweise einen ortsfesten Bereitstellungsabschnitt 2, der aus mehreren, quer zur Zuführrichtung 4 in Abständen angeordneten bzw. in einem Gestell 5 drehbar gelagerten Rollen 6 besteht. Diese Rollen 6 bilden eine Förderebene auf der sich die Behälter 3 bewegen, wozu die Rollen 6 auf wenigstens einer Seite von einem umlaufenden, endlosen Antriebsriemen 7 teilweise umschlungen sind. Zur Vergrösserung des Umschlingungswinkels können -wie dargestellt- zwischen zwei Rollen 6 zusätzliche Umlenkrollen 8 angeordnet sein.
   Der Bereitstellungsabschnitt 2 ist in mehrere, beispielsweise die Länge eines Zielstellenabschnittes bzw. einer Sortierstrecke einer Sortieranlage angepasste, Förderabschnitte 9 aufgeteilt, denen jeweils ein Behälter 3 zugeordnet ist. Diese Förderabschnitte 9 sind als Abstellplätze der Behälter 3 ausgebildet und die Abstellplätze zweier sich folgender Förderabschnitte 9 sind durch eine Schalt- 10 und eine Absperreinrichtung 11 verbunden, die miteinander verkuppelt sind. Dabei ist die Schalteinrichtung 10 dem in Förder- resp. Zuführrichtung hinteren Ende eines Förderabschnitte 9 und die Absperreinrichtung 11 dem vorderen Ende des entgegen der Förderrichtung anschliessenden Förderabschnittes 9 zugeordnet.
   Die Entnahme der Behälter 3 an dem Bereitstellungsabschnitt 2 erfolgt jeweils senkrecht zur Zuführrichtung 4, vorzugsweise in einer Horizontalebene.
   Durch die Betätigung der Schalteinrichtung 10 durch einen auf einem Förderabschnitt einlaufenden resp. durchlaufenden bzw. zugeführten Behälter 3 wird am Förderende des stromaufwärts anschliessenden Förderabschnittes 9 ein Auflaufelement 12 der Absperreinrichtung 11 in Sperrlage versetzt, sodass ein nachfolgender Behälter 3 aufgehalten wird. Verlässt der vorauslaufende Behälter 3 seinen Abstellplatz resp. durchläuft er einen Förderabschnitt 9 stromabwärts, dann entfernt er sich von der Schalteinrichtung 10 und gibt dadurch dem nächstfolgenden, auf dem stromaufwärts anschliessenden Förderabschnitt 9 stehenden Behälter 3 den Förderweg frei.
Fig. 2 vermittelt die Anordnungsweise der Rollen 6 und der Schalt- 10 und Absperreinrichtung 11 sowie der eben erwähnten weiteren Konstruktionsteile, die an dem Gestell 5 befestigt sind.
   Anhand der Fig. 3 bis 5 wird anschliessend die Ausgestaltung und die Funktionsweise der mit der erfindungsgemässen Vorrichtung 1 verbundenen Schalt- 10 und Absperreinrichtung 11 erklärt.
Fig. 3 zeigt die Schalt- 10 und Absperreinrichtung 11 in der Verriegelungsposition, in der der vordere Behälter 3 durch Niederdrücken eines zur Schalteinrichtung 10 gehörenden Betätigungshebels 13, der an einer Rollenaxe 14 schwenkbar gelagert ist, über eine Klinke 15 das als Hebel ausgebildete Auflaufelement 12 der Absperreinrichtung 11 in Betriebslage hält und so den nachkommenden Behälter 3 an der Fortbewegung hindert. Die Klinke 15 ist mit einem Ende an dem hebelartigen Auflaufelement 12 der Absperreinrichtung 11 angelenkt und liegt anderenends über eine erweiterte Ausnehmung 19 auf einem den Betätigungshebel 13 lagernd aufnehmenden Wellenzapfen 16 einer Rolle 6 auf. Zur Sicherung der Versteifung zwischen Schalt- 10 und Absperreinrichtung 11 ist am Betätigungshebel 13 auf der an der Axe gegenüberliegenden Seite ein Nocken 17 befestigt, der in eine Einrastnute 18 der Klinke 15 eingreift.

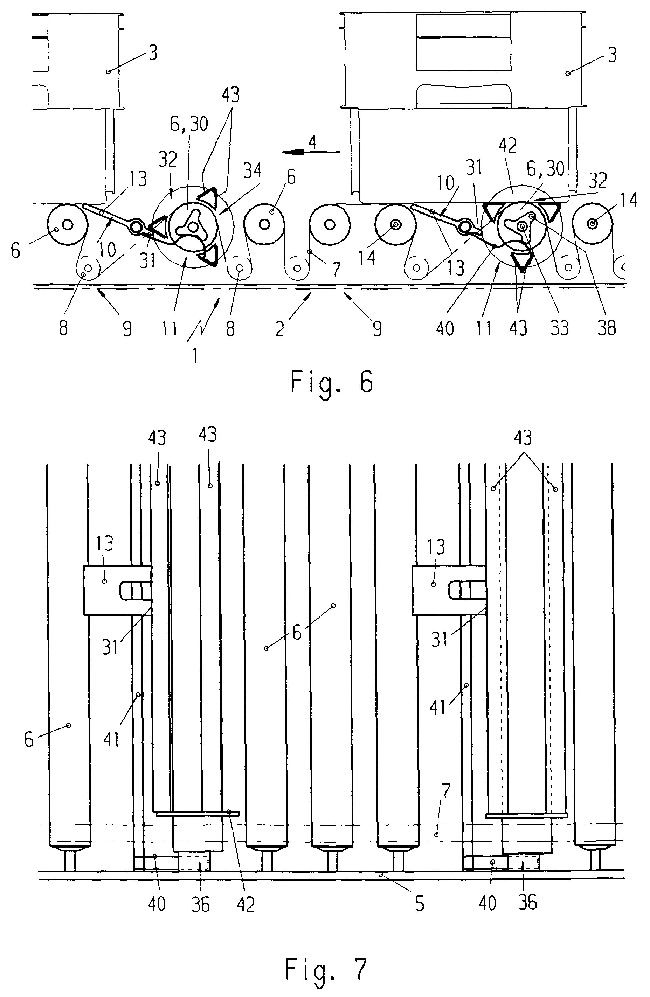

Die Schwenkbewegung der Klinke 15 zum Einrasten und Lösen der Arretierung besteht in einer den Wellenzapfen 16 einer Rolle 6 erweitert umschliessenden Ausnehmung 19.
Hat ein Behälter 3 einen Abstellplatz bzw. einen Förderabschnitt 9 verlassen -siehe Fig. 4- dann bewegt sich der Betätigungshebel 13 mit Hilfe der Zugkraft einer Feder 20 nach oben, soweit dies die Ausnehmung 19 der Klinke 15 und ein als Führungsanschlag 21 eines an dem Betätigungshebel 13 befestigten Bolzens 22 erlauben. Dabei hängt der Betätigungshebel 13 am Nocken 17 aus und die Klinke 15 wird durch die Kraft des auf dem Bereitstellungsabschnitt 2 angetriebenen nachfolgenden Behälter 3 über das nach unten gedrückte, hebelartig ausgebildete Auflaufelement 12 versetzt, bis der rechte Rand der Ausnehmung 19 an dem Wellenzapfen 16 aufschlägt. Der in Fig. 5 den Betätigungshebel 13 schon niederdrückende Behälter 3 verlässt den stromaufwärts liegenden Förderabschnitt 9; anschliessend wird durch die Feder 20 das Auflaufelement 12 und die Klinke 15 zurückgezogen und durch Einrasten an Nocken 17 arretiert (Zustand gemäss Darstellung in Fig. 3).
Damit die Behälter 3 jeder Breite durch das Auflaufelement 12 zurückgehalten werden, ist eine quer zur Zuführrichtung 4 verlaufende, die hebelartigen Auflaufelemente 12 beidseits des Bereitstellungsabschnittes 2 verbindende Stange 23 vorgesehen.

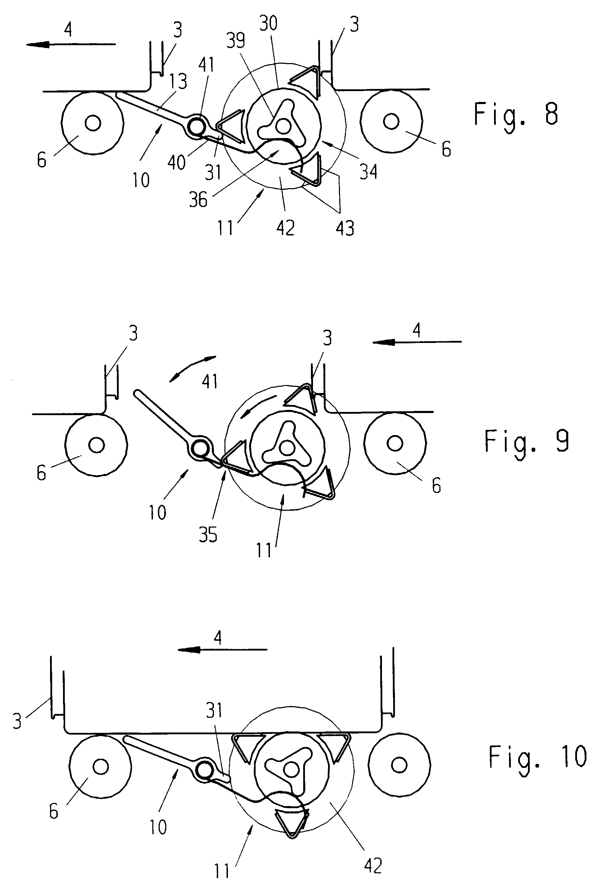

Eine alternative Ausführung der Vorrichtung 1 nach den Fig. 6 bis 10 besteht wiederum aus einem mehrere quer zur Zuführrichtung 4 der Behälter 3 angeordnete, eine Förderebene bildende, antreibbare Rollen 6 aufweisenden Bereitstellungsabschnitt 2. Diese Ausführung weist einen um eine quer zur Zuführrichtung 4 der Behälter 3 angeordnete Achse schwenkbaren, als Schalteinrichtung 10 ausgebildeten Betätigungshebel 13 auf, der von einem stromabwärts fortbewegten Behälter 3 in eine Schalt- 10 und Absperreinrichtung 11 lösbar verriegelnde Lage verschwenkbar ist. Hierzu ist an der Schwenkachse ein an dem Betätigungshebel 13 gegenüberliegend befestigter Riegel 31 vorgesehen, welcher ein um eine parallele Achse 33 drehbar angeordnetes Absperrorgan 32 der Absperreinrichtung 11 in Sperrlage hält bzw. arretiert, so dass eine gegenseitige Verriegelung entsteht.
Gemäss Fig. 7 ist der Betätigungshebel 13 etwa in der Längsmittelachse des Bereitstellungsabschnittes 2 angeordnet, wobei er auch eine breitere Form als dargestellt aufweisen kann.
Das Sperrorgan 32 weist einen gleichmässig um die Achse 33 verteilte gleichseitigen Dreieckquerschnitt von parallel zur Achse 33 verlaufenden Seitenflächen 34 auf. Gemäss Darstellung in Fig. 6 befinden sich die Sperrorgane 32 trotz gleicher Lage des Betätigungshebels 13 in einer unterschiedlichen Betriebslage bzw. in Sperr- resp. Durchlauflage, wobei der stromabwärts erkennbare Förderabschnitt 9 durch ein Behälter 3 belegt ist, wogegen dem stromaufwärts anschliessenden Förderabschnitt 9 ein Behälter 3 eben zugeführt wird. Genauere Funktionsangaben enthält der Beschreibungsteil zu den Fig. 8 bis 10.
In der Sperrlage bildet das Sperrorgan 32 eine dem zugeführten bzw. anstehenden Behälter 3 zugewandte senkrechte Seitenfläche 34 und ist an der gegenüberliegenden Dreieckskante 35 durch den Riegel 31 des von einem Behälter 3 belasteten Betätigungshebels 13 arretierend unterstützt.
Diese Situation wird durch die Fig. 8 vermittelt, indem ein auf einem Förderabschnitt 9 sich befindender Behälter 3 den Betätigungshebel 13 unter der Förderebene festhält, um gleichzeitig mit dem Riegel 31 das Sperrorgan 32 zu stützen, das durch den auf dem stromaufwärts angeordneten Förderabschnitt 9 an dem Sperrorgan 32 aufgelaufenen Behälter 3 Druck ausübt, solange die Rollen 6 unter Dreheinfluss stehen.

Es hat sich übrigens gezeigt, dass sich eine mit einem Reibbelag beschichtete Rolle 6 nicht in jeder Beziehung günstig auf die Förderung der Behälter 3 auswirkt, denn beispielsweise ein Schlupfeffekt der Rollen 6 an den stillstehenden Behältern 3 kann auch zu Verschleissschäden führen.
Fig. 9 veranschaulicht eine Situation, bei der der stromabwärts voranstehende Behälter 3 die in Fig. 8 eingenommene Position verlassen hat, sodass der Betätigungshebel 13 aufgrund des vom nachfolgenden Behälter 3 das Sperrorgan 32 entwickelten Druckes nach oben ausgehoben und die Arretierung des Sperrorgans 32 aufgehoben wird. Durch die Fortbewegung des Behälters 3 wird das Sperrorgan 32 weitergedreht bis es die Lage gemäss Fig. 10 -etwa koplanar zur Förderebene- einnimmt.
Der Behälter 3 setzt sich weiter fort und erfasst dabei den Betätigungshebel 13, der in der gedrückten Stellung zur Arretierung des Sperrorgans 32 bereitsteht.
Sobald der Behälter 3 über das Sperrorgan 32 hinweggefahren ist, wird letzteres durch eine Stelleinrichtung 36 in eine Lage verdreht, in der es durch eine Seitenfläche 34 eine stromaufwärts gerichtete senkrechte Wand bildet und von dem Riegel 31 in Sperrlage gehalten wird. Hierzu ist stirnseitig an dem Sperrorgan 32, konzentrisch zu dessen Drehachse 33, ein Einrastrad 38 befestigt, das am Umfang jeder Seitenfläche 34 des Sperrorgans 32 zugeordnete Vertiefungen 39 aufweist, auf die eine entsprechend gebogene Blattfeder 40 das Einrastrad 38 bzw. das Sperrorgan 32 in die Sperrlage versetzend einwirkt (siehe Sperrlage in Fig. 8).
Die durch die Kraft der Blattfeder 40 erzeugte Reibungskraft wird durch die auf den Behälter 3 wirkende Antriebskraft der Rollen 6 überwunden, wobei sich die Blattfeder 40 entlang der Vertiefung 39 aus dem Einrastrades 38 hebt (siehe Fig. 8 bis 10).

Zu erwähnen bleibt weiter, dass die durch die gleichseitige Dreiecksform des Sperrorgans 32 gebildete, quer zur Zuführrichtung 4 verlaufende Schwerlinie in der Drehachse 33 des Sperrorgans 32 liegt.

Es erweist sich, dass geschlossene Seitenflächen 34 des Sperrorgans 32 aufgrund der erforderlichen Breite einen jeweils förderunwirksamen Bereich an dem Bereitstellungsabschnitt 2 bilden. Deshalb ist es zweckmässig, wenn die Drehachse 33 des Sperrorgans 32 eine mit den übrigen Rollen 6 antriebsverbundene oder eine frei drehende Rolle 30 des Bereitstellungsabschnittes 2 aufweist, deren Durchmesser bzw. die mit dem Umfang die Seitenflächen 34, die entlang der Drehachse 33 unterbrochen sind, förderwirksam überstehen.
Die Seitenflächenteile 43 der Seitenflächen 34 sind bei dieser Ausgestaltungsform des Sperrorgans 32 an seitlich der Rolle 6, 30 frei drehbar gelagerten Flanschen 42 befestigt.
Zur Begünstigung der Förderwirkung dieser Rolle 6 bzw. 30 weist sie einen grösseren Durchmesser als die übrigen Rollen 6 des Bereitstellungsabschnittes 2 auf.

Der Bereitschaftsabschnitt 2 kann in Gruppen mehrerer Förderelemente 9 unterteilt sein, wobei die einer Gruppe angehörenden Rollen 6, 30 gemeinsam angetrieben und die Gruppen wiederum ein- und ausschaltbar gesteuert sind. D.h., bei fehlenden Lücken zwischen den Behältern 3 einer Gruppe von Förderabschnitten 9 schaltet eine Steuerung die angetriebenen Rollen 6, 30 dieser Gruppe aus.

## Patentansprüche

1. Verfahren für eine lückenlose Aufstellung von einem Bereitstellungsabschnitt (2) hintereinander zugeführten Behältern (3), die dem Bereitstellungsabschnitt (2) wahlweise entnehmbar sind, dadurch gekennzeichnet, dass durch ein dem Bereitstellungsabschnitt (2) entnommener Behälter (3) und die diesem auf bzw. zu dem Bereitstellungsabschnitt (2) in Zuführrichtung betrachtet folgenden Behälter (3) ein das Auffüllen der Lücken bewirkendes selbsttätiges Nachführen der jeweils nachfolgenden Behälter (3) auslösen.

2. Verfahren nach Anspruch 1, dadurch gekennzeichnet, dass die einem dem Bereitstellungsabschnitt (2) quer zur Zuführrichtung (4) entnommenen Behälter (3) in Zuführrichtung (4) nachfolgenden Behälter (3) durch den jeweils vor ihnen stehenden Behälter (3) zur Nachführung ausgelöst werden.

3. Verfahren nach einem der Ansprüche 1 oder 2, mit einem mehrere quer zur Zuführrichtung (4) der Behälter (3) angeordnete, eine Förderebene bildende, antreibbare Rollen (6) aufweisenden Bereitstellungsabschnitt (2), dadurch gekennzeichnet, dass der Bereitstellungsabschnitt (2) durch mehrere, als Abstellplätze für die Behälter (3) dienende Förderabschnitte (9) gebildet ist, wobei durch die Belegung eines Abstellplatzes der auf dem stromaufwärts anschliessenden Förderabschnitt (9) sich befindende Behälter (3) auf dessen Abstellplatz aufgehalten wird.

4. Verfahren nach einem der Ansprüche 1 bis 3, dadurch gekennzeichnet, dass ein den Abstellplatz stromabwärts verlassender Behälter (3) den auf dem stromaufwärts aufgehaltenen Behälter (3) zur Förderung freistellt.

5. Verfahren nach einem der Ansprüche 1 bis 4, dadurch gekennzeichnet, dass die Behälter (3) in Richtung ihrer Anordnung auf dem Bereitstellungsabschnitt (2) hintereinander oder senkrecht zu dem Bereitstellungsabschnitt (2) nebeneinander letzterem zugeführt werden.

6. Vorrichtung zur Durchführung des Verfahrens nach den Ansprüchen 1 bis 5, bestehend aus einem mehrere quer zur Zuführrichtung (4) der Behälter (3) angeordnete, eine Förderebene bildende, antreibbare Rollen (6) aufweisenden Bereitstellungsabschnitt (2) für nacheinander zugeführte Behälter (3), dadurch gekennzeichnet, dass der Bereitstellungsabschnitt (2) durch in Zuführrichtung (4) der Behälter (3) aneinandergereihte Förderabschnitte (9) gebildet ist, die als Abstellplätze der Behälter (3) ausgebildet und selbsttätig durch die Behälter (3) bzw. durch deren quer zur Zuführungsrichtung (4) erfolgten Entnahme förderwirksam ein- und ausschaltbar sind.

7. Vorrichtung nach Anspruch 6, dadurch gekennzeichnet, dass der Bereitstellungsabschnitt (2) durch hintereinander oder nebeneinander förderwirksamen Förderabschnitten (9) gebildet ist.

8. Vorrichtung nach Anspruch 6 oder 7, dadurch gekennzeichnet, dass zwischen zwei sich folgenden Förderabschnitten (9) eine dem Abstellplatz des stromabwärts angeordneten Förderabschnittes (9) zugeordnete, durch einen Behälter (3) betätigbare Schalteinrichtung (10) vorgesehen ist, welche mit einer dem Abstellplatz des stromaufwärts anschliessenden Förderabschnittes (9) zugeordneten, ein- und ausschaltbaren Auflaufelement (12) einer Absperreinrichtung (11) verbunden ist.

9. Vorrichtung nach Anspruch 8, dadurch gekennzeichnet, dass die mit der Absperreinrichtung (11) verbundene Schalteinrichtung (10) durch einen sich auf dem Abstellplatz eines Förderabschnittes (9) befindenden Behälter (3) in eine den Förderfluss an dem stromaufwärts anschliessenden Förderabschnitt (9) hindernde Verriegelungsstellung versetzbar ist.

10. Vorrichtung nach Anspruch 9, dadurch gekennzeichnet, dass die Schalteinrichtung (10) einen um eine quer zur Zuführrichtung (4) der Behälter (3) angeordnete Achse schwenkbaren, von einem auf einem Förderabschnitt (9) fortbewegten Behälter (3) zur lösbaren Verriegelung von Schalt- (10) und Absperreinrichtung (11) in die Förderebene umlegbaren Betätigungshebel (13), und eine an dem als Hebel um eine parallele Achse schwenkbar ausgebildeten Auflaufelement (12) der Absperreinrichtung (11) angelenkte Klinke (15) zum Einrasten an dem Betätigungshebel (13) aufweist.

11. Vorrichtung nach Anspruch 10, dadurch gekennzeichnet, dass die Klinke (15) eine in der Achse des Betätigungshebels (13) angeordnete Welle (16) umgebende, die Schwenkbewegung der Klinke (15) begrenzende erweiterte Ausnehmung (19) aufweist.

12. Vorrichtung nach einem der Ansprüche 10 und 11, dadurch gekennzeichnet, dass die Schwenkbewegung des Betätigungshebels (13) aus der Förderebene durch einen an der Klinke (15) ausgebildeten Führungsanschlag (21) begrenzt ist.

13. Vorrichtung nach einem der Ansprüche 10 bis 12, dadurch gekennzeichnet, dass der Betätigungshebel (13) auf der gegenüberliegenden Seite der Achse einen zum Einrasten der Klinke (15) vorgesehenen Nocken (17) aufweist.

14. Vorrichtung nach einem der Ansprüche 10 bis 13, dadurch gekennzeichnet, dass der Betätigungshebel (13) zur Aushebung aus der Förderebene und das als Hebel ausgebildete Auflaufelement (12) der Absperreinrichtung (11) durch eine vorgespannte Feder (20) verbunden sind.

15. Vorrichtung nach Anspruch 14, dadurch gekennzeichnet, dass die für das Hochstellen von Betätigungshebel (13) und Auflaufelement (12) erforderliche Zugkraft der Feder (20) kleiner ist als die durch den an dem als Hebel ausgebildeten Auflaufelement (12) auflaufenden Behälter (3) erzeugte Kraft.

16. Vorrichtung nach einem der Ansprüche 6 bis 15, dadurch gekennzeichnet, dass die Achsen des Betätigungshebels (13) und des Auflaufelementes (12) konzentrisch auf die Achsen zweier benachbarter Rollen (6) verteilt sind.

17. Vorrichtung nach Anspruch 16, dadurch gekennzeichnet, dass beidseits des Bereitstellungsabschnittes (2) eine zwei benachbarten Förderabschnitten (9) zugeordnete Schalt- (10) und Absperreinrichtung (11) vorgesehen ist.

18. Vorrichtung nach Anspruch 17, dadurch gekennzeichnet, dass das Auflaufelement (12) der Absperreinrichtung (11) durch wenigstens eine quer zur Zuführrichtung (4) der Behälter (3) verlaufende Stange (23) gebildet ist.

19. Vorrichtung nach einem der Ansprüche 6 bis 18, dadurch gekennzeichnet, dass die Rollen (6) mit einem endlos umlaufenden Zugmittel (7) antriebsverbunden sind.

20. Vorrichtung nach Anspruch 16, dadurch gekennzeichnet, dass die Schalt- (10) und Absperreinrichtung (11) etwa längsmittig des Bereitstellungsabschnittes (2) angeordnet ist.

21. Vorrichtung nach Anspruch 20, dadurch gekennzeichnet, dass die mit der Schalt- (10) und Absperreinrichtung (11) gemeinsame Achsen aufweisenden Rollen (6) durch einen Zwischenabstand unterbrochen sind.

22. Vorrichtung nach einem der Ansprüche 6 bis 9, bestehend aus einem mehrere quer zur Zuführrichtung (4) der Behälter (3) angeordnete, eine Förderebene bildende, antreibbare Rollen (6) aufweisenden Bereitstellungsabschnitt (2) für nacheinander zugeführte Behälter (3), dadurch gekennzeichnet, dass die Schalteinrichtung (10) einen um eine quer zur Zuführrichtung (4) der Behälter (3) angeordnete Achse schwenkbaren, von einem stromabwärts fortbewegten Behälter (3) zur lösbaren Verriegelung von Schalt- (10) und Absperreinrichtung (11) vorgesehenen Betätigungshebel (13) aufweist, der durch einen an der Schwenkachse gegenüberliegend befestigten, ein um eine parallele Achse (33) drehbar angeordnetes Sperrorgan (32) der Absperreinrichtung (11) in Sperrlage haltenden Riegel (31) ausgebildet ist.

23. Vorrichtung nach Anspruch 21, dadurch gekennzeichnet, dass das Sperrorgan (32) eine gleichmässig um die Achse (33) verteilte gleichseitige Dreieckform von parallel zur Achse (33) verlaufenden Seitenflächen (34) aufweist.

24. Vorrichtung nach Anspruch 23, dadurch gekennzeichnet, dass das Sperrorgan (32) in Sperrlage eine dem zugeführten Behälter (3) zugewandte senkrechte Seitenfläche (34) bildet und mit der gegenüberliegenden Dreieckskante (35) durch den Riegel (31) des von einem Behälter (3) belasteten Betätigungshebels (13) unterstützt ist.

25. Vorrichtung nach Anspruch 23, dadurch gekennzeichnet, dass die senkrechte Seitenfläche (34) des Absperrorgans (32) nach Aufhebung der Verriegelung durch den eine Drehbewegung bewirkenden aufgelaufenen Behälter (3) eine koplanare Ebene mit der Förderebene des Bereitstellungsabschnittes (2) bildet.

26. Vorrichtung nach einem der Ansprüche 22 bis 25, dadurch gekennzeichnet, dass das Sperrorgan (32) in freistehender Lage durch eine Stelleinrichtung (36) in Sperrlage versetzbar ist.

27. Vorrichtung nach einem der Ansprüche 23 bis 25, dadurch gekennzeichnet, dass die Schwerlinie des einen gleichseitigen Dreieckquerschnitt aufweisenden Sperrorgans (32) dessen Drehachse (33) bildet.

28. Vorrichtung nach einen der Ansprüche 22 bis 27, dadurch gekennzeichnet, dass die Drehachse (33) des Sperrorgans (32) eine mit den übrigen Rollen (6) antriebsverbunde Rolle (6, 30) des Bereitstellungsabschnittes (2) aufweist, die mit dem Umfang unterbrochene Seitenflächen (34) des Sperrorgans (32) förderwirksam übersteht.

29. Vorrichtung nach Anspruch 28, dadurch gekennzeichnet, dass die Rolle (30) des Sperrorgans (32) einen grösseren Durchmesser als die übrigen Rollen (6) des Bereitstellungsabschnittes (2) aufweist.

30. Vorrichtung nach einem der Ansprüche 28 und 29, dadurch gekennzeichnet, dass die unterbrochenen Seitenflächen (34) resp. Seitenflächenteile (43) des Sperrorgans (32) an seitlich der Rolle (6, 30) frei drehbar gelagerten Flanschen (42) befestigt sind.

31. Vorrichtung nach einem der Ansprüche 22 bis 30, dadurch gekennzeichnet, dass das Sperrorgan (32) wenigstens annähernd die Länge einer tragenden Rolle (6) des Bereitstellungsabschnittes (2) aufweist.

32. Vorrichtung nach einem der Ansprüche 22 bis 31, dadurch gekennzeichnet, dass der Betätigungshebel (13) an einer zur Drehachse (33) des Sperrorgans (32) parallelen Welle (41) befestigt ist.

33. Vorrichtung nach einem der Ansprüche 26 bis 32, dadurch gekennzeichnet, dass wenigstens eine Stirnseite des Sperrorgans (32) durch ein Einrastrad (38) einer gestellseitig befestigten, einrastbaren Blattfeder (40) ausgebildet ist.

34. Vorrichtung nach Anspruch 26 bis 33, dadurch gekennzeichnet, dass die Seitenflächen (34) des Sperrorgans (32) durch die Kraft einer Blattfeder (40) beaufschlagbar ist.

35. Vorrichtung nach einem der Ansprüche 6 bis 34, dadurch gekennzeichnet, dass der Bereitstellungsabschnitt (2) in Gruppen mehrerer Förderelemente (9) unterteilt ist.

36. Vorrichtung nach Anspruch 35, dadurch gekennzeichnet, dass die Gruppen der gemeinsam angetriebenen Rollen (6, 30) ein- und ausschaltbar gesteuert sind.
